# EUROPÄISCHE PATENTSCHRIFT

(11) **EP 0 686 817 B1**
(45) Veröffentlichungstag und Bekanntmachung des Hinweises auf die Patenterteilung: **22.10.1997**
(21) Anmeldenummer: 95201281.3
(22) Anmeldetag: 16.05.1995
(51) Int. Cl.: F25D 25/02, A47B 75/00, F16B 12/44

(54) **Regal zum Gebrauch in Gefrier- und Lagerräumen**
Rack for use in freezers and storerooms
Etagère pour utilisation dans des endroits de rangement et de congélation

(30) Priorität: 17.05.1994 NL 9400801
(43) Veröffentlichungstag der Anmeldung: 13.12.1995
(73) Patentinhaber: Hense, Herbert Richard, 59581 Warstein (DE); De Rijk, Hugo Casper Johan, 2566 PV 's-Gravenhage (NL)
(72) Erfinder: Hense, Herbert Richard, 59581 Warstein (DE); De Rijk, Hugo Casper Johan, 2566 PV 's-Gravenhage (NL)
(74) Vertreter: Boelsma, Gerben Harm, Ir.

(56) Entgegenhaltungen:
- EP-A- 0 053 993
- DE-A- 4 003 602

## Beschreibung

Die Erfindung betrifft ein zum Gebrauch in Gefrier- und Lagerräumen bestimmtes Regal, zusammengesetzt aus mindestens zwei Ständern und zwischen diesen vorgesehenen, auf den Ständern stützenden Auflagen, wobei die Ständer aus zwei in der Nähe der oberen und unteren Enden verbundenen Rohrprofilen bestehen und die Auflagen je zwei, ebenfalls durch Rohrprofile gebildete Holme aufweisen, deren Enden zum Eingriff mit von den jeweiligen Ständerrohrprofilen seitlich ausragenden Kupplungsteilen eingerichtet sind.

Ein derartiges Regal ist bekannt und unter den Namen FERMOSTOCK im Handel. Eine wichtige Anwendung dieses Regals liegt im Gebiet der Lebensmittel. Bei diesem bekannten Regal werden die seitlich von den völlig aus Aluminium bestehenden Ständerprofilen ausragenden Kupplungsteile durch gesonderte, an den jeweiligen Ständerprofilen angeschraubten Stützohren mit nach oben öffnenden Rasten zum klemmenden Aufnehmen von die Enden der Holme durchquerenden Tragbolzen.

Ein derartiges Regal ist bekannt unter den Namen IM92.

Derartige Regale haben im Allgemeinen eine gute Stabilität. Das Aluminium der Rohrprofile der Ständer und Holme hat jedoch den Nachteil, dass die Beständigkeit gegen bestimmte Flüssigkeiten bzw. Saften, die bei einigen Lebensmitteln, wie Fleisch und von diesem abgeleiteten Produkten, eine Rolle spielen, weniger gut ist. Ferner führt eine Beschädigung der Aluminiumteile zu Korrosion, was für viele Anwendungen unakzeptierbar ist. In Gebieten, wo leicht Beschädigungen auftreten, werden bestimmte Teile, die im Hinblick auf die Festigkeit und Stabilität des Ganzen eine kleinere Rolle spielen, wie die Platten der Auflagen, deshalb öfters aus Kunststoff hergestellt.

Schliesslich führt die grössere Anzahl von Teilen zu ebenso viele Verbindungsnähten zwischen diesen Teilen, welche Verbindungsnähten sich im Gebrauch leicht öffnen und dann das Hineindringen von Verunreinigungen und Bakterien gestatten, sodass diese Regale im Hinblick auf die insbesondere bei Anwendung in der Lebensmittelbranche geltenden Forderungen der Hygiene betreffend nicht optimal sind.

Die Erfindung beabsichtigt nunmehr das bekannte Regal in dieser Hinsicht zu verbessern, unter Beibehaltung einer guten Stabilität.

Erfindungsgemäss wird dieser Zweck dadurch erreicht, dass sowohl die Ständerrohrprofile wie auch die Holme der Auflagen aus einem metallischen Rohrkern und einer diesen über die ganze Länge ringsherum, wie auch an den Enden umschliessenden Bekleidung aus Kunstsoff bestehen, wobei die von den Ständerrohrprofilen ausragenden Kupplungsteile mit der Kunststoffbekleidung dieser Rohrprofile aus einem Stück geformt sind, während die Enden der Holme mit Kupplungsteilen versehen sind, die entsprechend der seitlich ausragenden Kupplungsteilen der Ständerrohrprofile geformt sind und formschlüssig mit der Bekleidung an den Stirnenden der Holme verbunden sind.

Auf diese Weise wird ein Regal erhalten, das den durch die Kunststoffbekleidung geschützten Rohrkernen in den Ständerprofilen und Holmprofilen seine Festigkeit und Stabilität herleitet. Sogar bei einer verhältnismässig dünne Kunststoffbekleidung bilden die einstückig hiermit geformten Kupplungsteile eine steife Einheit mit den Ständerrohren und den Holmen.

Desweiteren kann das erfindungsgemässe Regal einfach sauber gespritzt werden ohne dass die Reinigungsflüssigkeit dabei in die metallischen Kerne hineindringen kann.

Es wird bemerkt, dass es bekannt ist Pfosten und Stürze von Fenster- und Türrahmen aus Kunststoff mit einem metallischen Rohrkern rechteckigen Querschnitts zu versehen welcher mit einer die erforderlichen Längsprofilierungen enthaltenden, den eigentlichen Pfosten oder Sturz bildenden Bekleidung aus Kunststoff umschlossen wird. Die üblicherweise abgeschrägten Stirnränder derartiger Pfosten oder Stürze sind jedoch nicht mit Kunststoff bekleidet.

Nach einem weiteren Erfindungsmerkmal haben die Kupplungsteile der Ständer und Holme komplementär geformte Keilprofile.

In einer praktischen Ausbildungsform werden die ausragenden Kupplungsteile an den Ständerrohren durch vertikal gerichtete längliche Nocken gebildet, deren von der betreffenden Wandung des Ständerrohres abstehende Seiten nach unter divergieren und, im Querschnitt gesehen, zum Ständerrohr hin konvergieren, während die an den Holmen angeformten Kupplungsteile eine den betreffenden Kupplungsnocken ganz umschliessende Aufnahme aufweisen.

Mit den so gebildeten Nocken und deren komplementär geformten Kupplungsteilen wird eine in zwei gegenseitig senkrechten Richtungen wirksame Keilwirkung erhalten. Einerseits werden die komplementär geformten Kupplungsteile an den Holmenden der Auflagen ja in der Längsrichtung der Holme gegen die betreffenden Ständerrohre herangezogen, während sie andererseits in der Ebene der Ständer gegen die Ständerrohre verspannt werden.

Eine bevorzugte Ausführungsform wird dadurch gekennzeichnet, dass die Nocken an den einander zugekehrten Seiten der zum gleichen - Ständer ghörenden Ständerrohre vorgesehen sind und zwar in Paaren von nebeneinanderliegenden Nocken, wobei die Nocken jedes Paares mit ihren von einander abgekehrten Seiten in einer Ebene mit den betreffenden einander gegenüberliegenden Seitenwänden des betreffenden Ständerrohres liegen. Auf diese Weise kann jeder Ständer zum Tragen von sich an beiden Seiten des Ständers erstreckenden, in einer Ebene liegenden Auflagen dienen.

Es wird bemerkt, dass aus der EP-A-0 451 012 ein aus Ständern und Holmen bestehendes Regal bekannt ist, wobei die Ständerprofile jedes Ständers an den einander zugekehrten Seiten mit einfachen Reihen von aus einem Stück mit ihm geformten Kupplungsnocken versehen sind. In der Ausführungsform nach Fig. 1-5 dieses Dokuments haben die Nocken ausserdem die Gestalt von nach unten breiter werdenden Keilen mit, in Querschnitt gesehen, konkav geformten Keilflächen. Dabei arbeiten die Kupplungsnocken mit gesonderten, reiterartig auf diesen sitzenden Kupplungselementen zusammen, auf denen mit Aussparungen versehene, umgebogene Endränder der aus einer Stahlblechplatte bestehenden Auflageplatten eingehakt werden können.

Offensichtlich handelt es sich hierbei um Vollkunststoff-Ständer, mit welchen ohne eine verhältnismässig grosse Wandstärke nicht die gleiche Biegesteifheit und Formstabilität wie mit einem Regal mit durch einen (Stahl)rohrkern verfestigten Ständern zu erreichen ist. Ausserdem ist mit den konkav geformten Keilflächen der bekannten Kupplungsnocken nicht eine in zwei gegenseitig senkrechten Richtungen wirksame Keilwirkung zu erreichen.

Weitere Erfindungsmerkmale werden unten an Hand der Zeichnung mit Ausführungsbeispielen näher erläutert.
Fig. 1 ist eine Perspektivansicht der entkuppelte Verbindung zwischen einem Ständerrohr und einem Holm bei einem erfindungsgemässen Regal;
Fig. 1A zeigt eine Abwandlung der Verbindung nach Fig. 1;
Fig. 2 zeigt den oberen Endteil eines Ständerrohres, zum Teil im Schnitt;
Fig. 3 zeigt eine Seitenansicht des unteren Endteils eines Ständerrohres;
Fig. 4 zeigt einen Endabschnitt eines Querverbindungselementes zwischen zwei Ständerrohren, im Vertikalschnitt;
Fig. 5 zeigt eine Seitenansicht eines Teiles eines Ständerrohres mit einem Paar von Kupplungsnocken;
Fig. 6 ist ein Querschnitt nach der Linie VI-VI in Fig. 5;
Fig. 7 ist eine Seitenansicht eines Endabschnittes eines Holmes, zum Teil im Längsschnitt;
Fig. 8 zeigt einen Querschnitt durch einen Holm mit einer seitlich um diesen hakenden Eckverbindungsklammer;
Fig. 9 zeigt einen Horizontalschnitt durch die Verbindung zwischen einem Ständerrohr und zwei senkrecht zueinander liegenden Holmen und
Fig. 10 zeigt eine Stirnansicht, in verkleinertem Massstab, des Holmes, bei abgenommenen Kupplungsteil, in der Ausbildungsform nach Fig. 1A.

Das erfindungsgemässe Regal ist üblicherweise zusammengesetzt aus mindestens zwei Ständern und sich dazwischen in verschiedenen Höhen erstreckenden Auflagen.

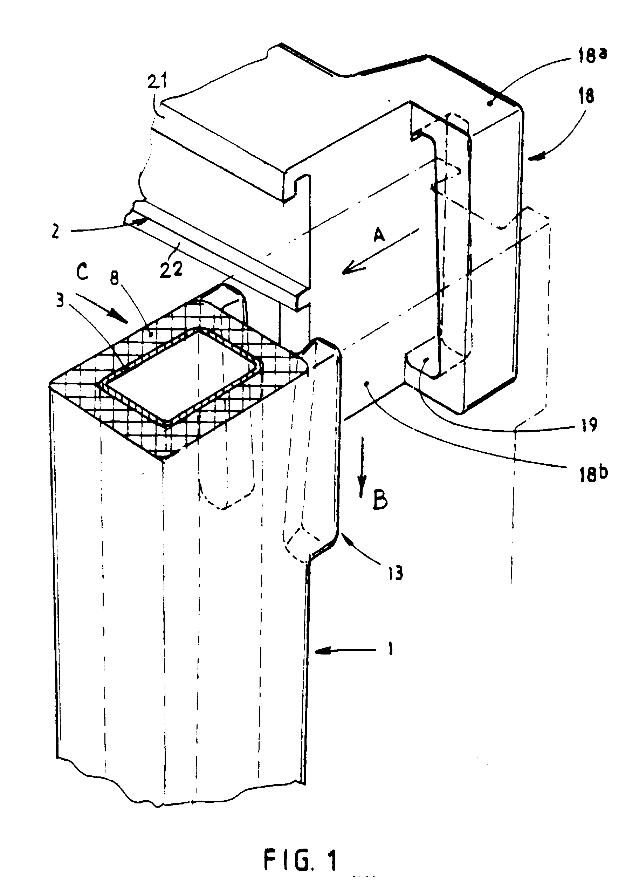

Jeder Ständer ist dabei aus zwei Ständerrohren 1 zusammengesetzt, welch in der Nähe der oberen und unteren Enden durch Querverbindungselemente miteinander verbunden sind, wie unten noch näher erläutert werden wird. Jede Auflage umfasst zwei Holme 2, auf welchen vorzugsweise aus Kunststoff geformte Platten aufgelegt werden. Diese Platten bilden keinen Teil der Erfindung und werden deshalb nur nebenbei bei der Beschreibung der Eckverbindungsklammer nach Fig. 1 genannt und gezeigt.

Die Ständerrohre 1 bestehen aus einem metallischen, vorzugsweise aus Stahl bestehenden Kernrohr 3, vorzugsweise mit einer rechteckigen Querschnittsform.

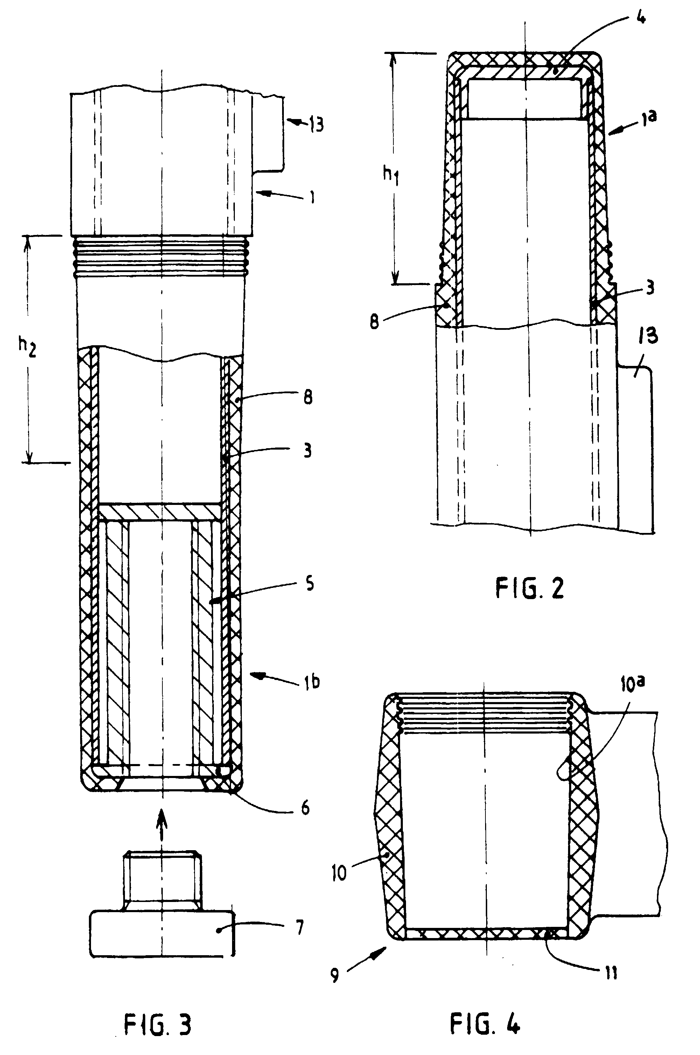

Der metallische Kernrohr 3 erstreckt sich über die ganze (Standard)länge (von zum Beispiel 1,8 m) des Ständerrohres und ist an seinem oberen Ende (siehe Fig. 2) und seinem unteren Ende (siehe Fig. 3) mit einem das betreffende Ende verschiessenden Einsatz 4 bzw. 5 versehen. Dabei wird der obere Einsatz 4 durch eine Verschlusskappe gebildet, während der untere Einsatz 5 besteht aus einer Einsatzbuchse mit einem auf den Stirnrand des Kernrohres 3 aufliegenden Flansch 6 und mit innerem Gewinde zum Aufnehmen eines Stellfusses 7. Das Kernrohr 3 ist über die ganze Länge mit einer Kunststoffbekleidung (zum Beispiel aus Polypropylen) versehen, welche durch bekannte Spritzverfahren angebracht werden kann und die sich ebenfalls um die verschlossenen Enden des Kernrohres erstreckt.

Nahe an den oberen und unteren Enden des Ständerrohres 1 hat die Bekleidung 8 eine Wandstärke, welche über eine bestimmte Höhe h1 (Fig. 2) bezw. h2 (Fig. 3) im Vergleich zur übrigen Bekleidung reduziert ist und zu den betreffenden Stirnenden hin abnimmt.

Das Ständerrohr hat also in der Nähe der beiden Enden einen Abschnitt 1a bezw. 1b, dessen Aussenmantel leicht konisch ist (zum Beispiel mit einer Konizität von 2°).

Diese leicht-konischen Endabschnitte 1a bezw. 1b bilden die Angriffstellen für die buchsenförmigen Enden 10 eines Querverbindungselementes 9, das in Fig. 4 gezeigt wird und dessen Hohlraum 10 eine Gestallt und Konizität aufweist, welche denjenigen der obengenannten Endabschnitte 1a bezw. 1b entsprechen. Die buchsenförmigen Endabschnitte der Querverbindungselemente, welche die oberen Enden von zwei Ständerrohren verbinden, können dabei an ihren verjüngten Enden mit einer dünnen Stirnwand 11 verschlossen sein. Zum Verbinden der unteren Enden von zwei Ständerrohren wird eine solche Stirnwand weggelassen bezw. entfernt.

Es wird klar sein, dass zwei Ständerrohre 1 und zwei Querverbindungselemente 9 unter Keilwirkung zwischen den ineinander greifenden Teilen (1a, 10) bezw. (1b, 10) der Standerrohre 1 und der Querelemente 9 zu einem biegfesten und formstabielen Ständer zusammenzusetzen sind.

Die Rohre 1 jedes Ständers sind mit seitlich vorspringenden Kupplungsteilen 13 versehen. Diese Kupplungsteile haben die Gestalt von länglichen, sich in der Längsrichtung des Ständerrohres 1 erstreckenden Nocken, deren von dem Ständerrohr abgekehrte Längsseite 13a parallel zur Achse des Ständerrohres verläuft und die beiden anliegenden, einander gegenüberliegenden Längsseiten 13b und 13c in der Richtung gegen das untere Ende des betreffenden Ständerrohres divergieren.

Die so erhaltenen keilförmigen Nocken 13 sind in Paaren angeordnet, welche regelmässig über die Länge des Ständerprofils verteilt liegen. Dabei entsprechen die Abstände zwischen aufeinanderfolgenden Nockenpaaren den erwünschten gegenseitigen Abständen zwischen den Auflagen im zu formierenden Regal.

Die Nocken 13 ragen alle von einer Längsseite des Ständerprofils aus, wobei die von einander abgekehrten Längsseiten 13b der zu einem gleichen Paar gehörenden Nocken 13 mit den angrenzenden Längsseiten des Ständerrohres in einer Ebene liegen.

Ferner bilden die Längsseiten 13c der Nocken 13 einen kleineren Winkel als 90° mit der anliegenden Längsseite des Ständerrohres, wodurch die Nocken 13 einen Querschnitt aufweisen, dessen Profil zum Ständerrohr hin unterschnitten ist. Wie aus der Zeichnung ersichtlich, sind die Nocken an den oberen und unteren Enden abgerundet. Die Nocken 13 sind mit der vom Kernrohr 3 getragenen Bekleidung 8 einstückig geformt.

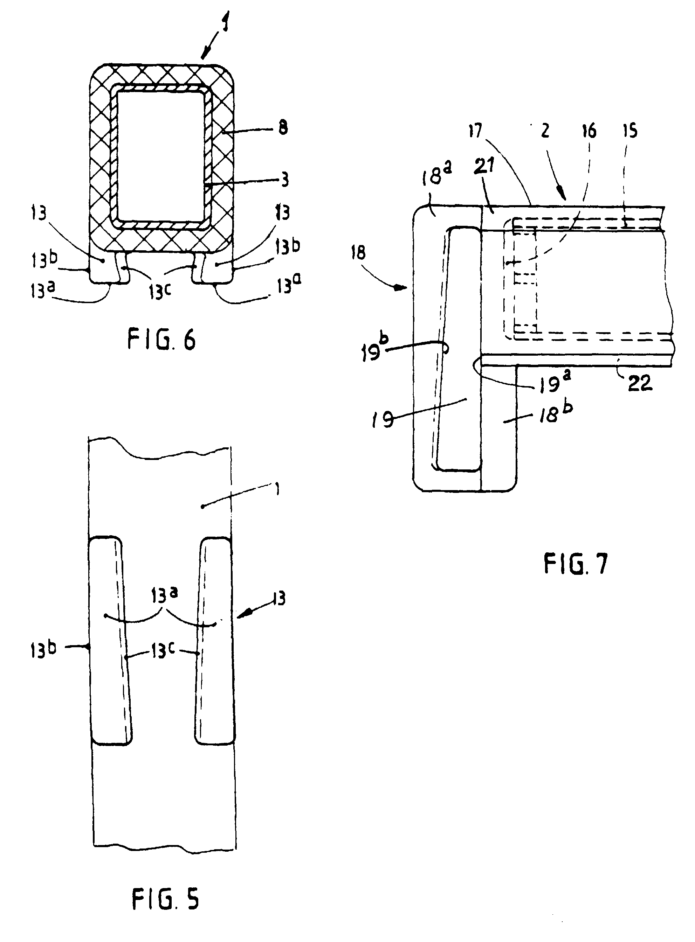

Er wird nunmehr auf Fig. 7 hingewiesen, in der der zu einer Auflage gehörende Holm 2 im Längsschnitt gezeigt ist. Ebenso wie das oben beschiebene Ständerrohr hat auch der Holm 2 einen metallischen (vorzugsweise aus Stahl bestehenden) Rohrkern 15 mit einer vorzugsweise rechteckigen Querschnittsform.

Das an den Enden mit Kappen 16 verschlossene metallische Kernrohr 15 wird über die ganze Länge ringsherum und um die Enden mit einer Kunststoffbekleidung 17 aus z.B. Polypropylen bedeckt. An den Enden des Holmes 2 sind aus einem Stück mit der Bekleidung 17 geformte Kupplungsteile 18 vorgesehen. Diese Kupplungsteile 18 haben etwa die Gestalt eines Winkelprofils, dessen oberes Ende mit der oberen Wand des Holmes in einer Ebene liegt und das an der unteren Seite einigermassen unter dem Holm ausragt. Dabei liegt der eine Flansch 18a des Winkelprofils einigermassen seitlich verschoben mit Bezug auf die vertikale Mittellängsfläche des Holmes 2, während der zweite Flansch 18b mit dem betreffenden Stirnende des Holmes in einer Ebene liegt.

Im Flansch 18a ist eine Aufnahme 19 ausgespart, deren Seitenwände 19a und 19b einen gegenseitigen verlauf haben, der demjenigen der gegenüberstehenden Längsseiten 13b und 13c des obenbeschriebenen Kupplungsnockens 13 entspricht. Dabei liegt die Seitenwand 19b mit der Stirnfläche des Flansches 18b in einer Ebene, während die Seitenwand 19b mit Bezug auf die Seitenwand 19a nach unten divergiert und andererseits ein wenig schräg zur Bodenfläche der Aufnahme 19 steht.

Die Länge 12 der Aufnahme 19 ist midestens so viel grösser als die Länge 11 des Nockens 13, dass der Kupplungsteil 18 mit seiner Aufnahme 19 von der Seite her (siehe die Pfeilrichtung A in Fig. 1) auf einen von einem Ständerrohr 1 ausragenden Kupplungsnocken 13 gesteckt werden kann. Indem darauf der Kupplungsteil 18 mit Bezug auf das Ständerrohr 1 nach unten verstellt wird (siehe den Pfeil B in Fig. 1), wird der Nocken 13 in der Aufname 19 unter Keilwirkung verspannt. Diese Keilwirkung geht mit dem Verspannen des Holmes 2 gegen das betreffende Ständerrohr in zwei gegenseitig senkrechten Richtungen einher, und zwar einerseits in der Richtung des Pfeiles A und andererseits in der Richtung des Pfeiles C (Fig. 1).

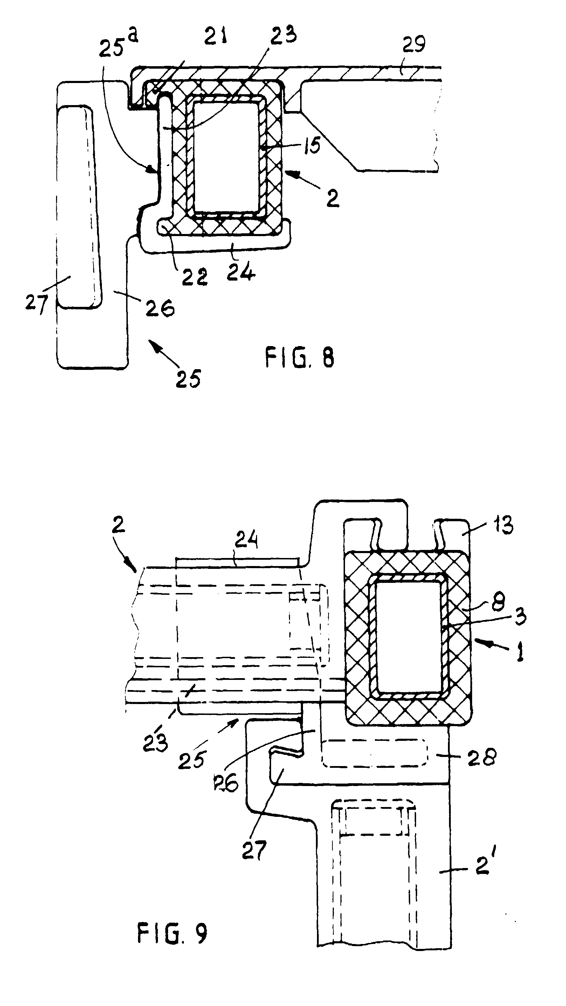

Die endgültige Kupplung zwischen Ständerrohr 1 und Holm 2 wird gezeigt in Fig. 9, in der ausserdem angegeben wird, wie ein zweiter, senkrecht zum Holm 2 liegender Holm 2 mittels einer Eckverbindungsklammer 25 angebracht werden kann.

Damit ein von einem ersten und einem Ständer mit sich dazwischen befindenden Auflagen gebildetes Regal mit einem Abschnitt erweitert werden kann, der senkrecht zum erstegenannten Regal steht und Auflagen enthält, die mit denjenigen des erstgenannten Regals in einer Ebene liegen, werden Eckverbindungsklammern verwendet.

An derjenigen Seite des Regals, an der der Erweiterungsabschnitt anschliessen soll, werden zwei Eckverbindungsklammern um die Holme der Auflagen angebracht, und zwar eine nahe an einem Ständerrohr und eine zweite an einer um die Auflagebreite vom diesem entfernt liegenden Stelle.

Fig. 9 zeigt die in der Nähe des Ständerrohres anzubringende, vorzugsweise aus dem gleichen Kunststoff wie derjenige der Bekleidung der Ständerrohre und Holme bestehende Eckverbindungsklammer 25. Zum Anbringen der Eckverbindungsklammern sind die Holme an ihren äusseren Längsseiten mit einem oberen, senkrecht nach unten biegenden Randteil 21 und einem unteren Randteil 22 versehen, welche Randteile insgesamt eine Aufnahme für das aufstehende Bein 23 einer Winkelklammer 25a bilden, deren liegendes Bein 24 federnd um die untere Seite des Holmes 2 greifen kann (siehe Fig. 8). Die Winkelklammer 25a trägt einen senkrecht ausragenden Steg 26 mit einem an diesem vorgesehenen Kupplungsnocken 27, der den an den Ständerrohren sitzenden Kupplungsnocken 13 entspricht.

In dieser Weise werden an zwei Stellen am Seitenrand jeder Auflage des unter einem rechten Winkel zu erweiternden Regals zwei Kupplungsnocken formiert, auf denen ebensoviele Holme angreifen können, welche Holme mit ihren anderen Enden mit den Kupplungsnocken an den Ständerrohren eines dritten Ständers gekuppelt werden.

An der vom Nocken 27 abgekehrten Seite des Steges 26 ist ein Vorsprung 28 (siehe Fig. 9) vorgesehen, der den Raum zwischen dem Stirnende des Holmes 2' und der gegenüberliegenden Wand des Ständers 1 ausfüllt. Ein ähnlicher Vorsprung kann bei der Eckverbindungsklammer verwendet werden, die an einer Zwischenstelle um den Holm 2 gehakt werden soll.

Schliesslich zeigt Fig. 8 einen Teil der Kunststoffplatten 29, die überdeckend auf die Holme 2 bezw. 2' aufgelegt werden.

In der Ausführungsvariante nach Fig. 1A ist der Ständer 100 an einer Seite 100a mit im Querschnitt unveränderlichen Längsrippen 101 und an der gegenüberliegenden Seite 100b mit Kupplungsnocken 113 versehen. Diese Kupplungsnocken 113 unterscheiden sich dadurch von den Nocken 13 in der Ausführungsform nach Fig. 1, dass sie nur in einer Richtung, und zwar in der Eben der angrenzenden Seite 100c bezw. 100d des Ständers nach unten divergieren.

In der Ausführungsvariante nach Fig. 1A ist der Holm 102 mit einem Kupplungsteil 118 versehen, die sich vom Kupplungsteil 18 in der Ausführungform nach Fig. 1 dadurch unterscheidet, dass er zum Zusammenarbeiten mit sowohl einem Längsrippen 101 wie auch einem gegenüberliegenden Nocken 113 des Ständers 100 eingerichtet ist. Zu diesem Zweck ist der Kupplungsteil am einen vertikalen Längsrand bei 120 zweimal rechtwinklig umgebogen, damit er um einen Rippen 101 greifen kann, währen der gegenüberliegende Längsrand 119 ebenfalls zweimal rechtwinklig umgebogen ist. Dabei hat jedoch die Fläche 119a einen nach unten hin divergierenden verlauf entsprechend der Keilform des zu umfassenden Nockens 113 des Ständers 100.

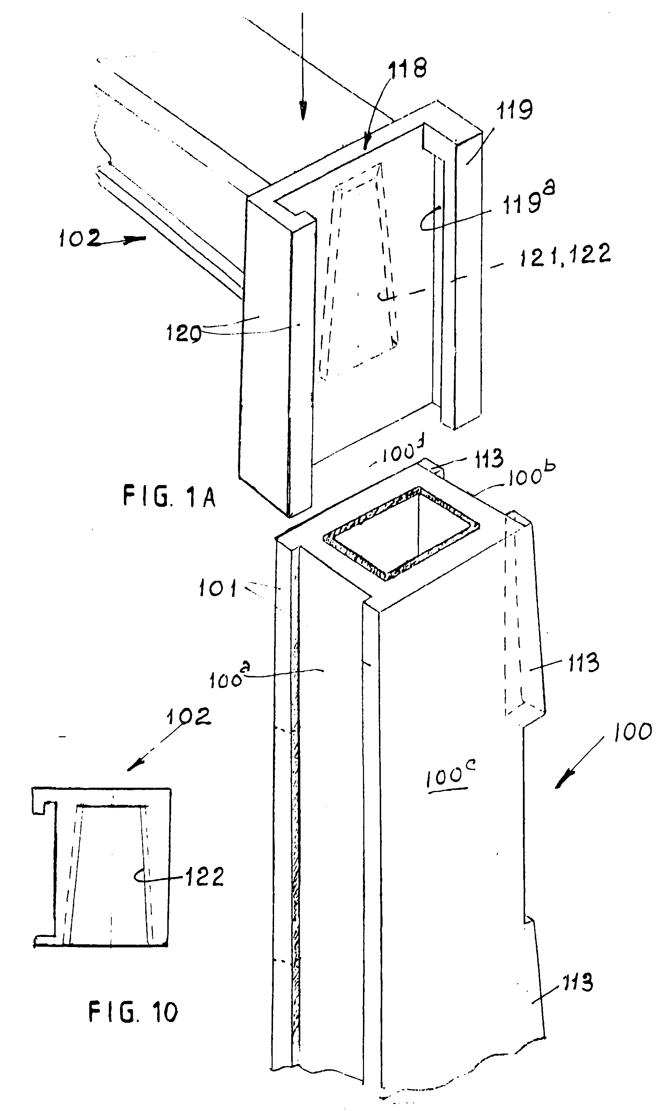

Ferner ist der Kupplungsteil 118 als ein gesonderter Kunststoffteil geformt und an der Rückseite mit einem angeformten, im Querschnitt schwalbenschwanzförmig und sich nach unten keilförmig verbreiternden Vorsprung 121 versehen, der in einer entsprechen geformten Aussparung 122 im Stirnende des Holmes 102 (siehe Fig. 10) passt. Im übrigen können der Ständer 100 und der Holm in der gleichen Weise wie oben im Zusammenhang mit der Ausführungsform nach Fig. 1 beschrieben wurde, ausgebildet sein.

## Patentansprüche

1. Zum Gebrauch in Gefrier- und Lagerräumen bestimmtes Regal, zusammengesetzt aus mindestens zwei Ständern und zwischen diesen vorgesehenen, auf den Ständern stützenden Auflagen, wobei die Ständer aus zwei in der Nähe der oberen und unteren Enden verbundenen Rohrprofilen bestehen und die Auflagen je zwei, ebenfalls durch Rohrprofile gebildete Holme aufweisen, deren Enden zum Eingriff mit von den jeweiligen Ständerrohrprofilen seitlich ausragenden Kupplungsteilen eingerichtet sind, dadurch gekennzeichnet, dass sowohl die Ständerrohrprofile (1) wie auch die Holme (2) der Auflagen aus einem metallischen Rohrkern (3,15) und einer diesen über die ganze Länge ringsherum, wie auch an den Enden umschliessenden Bekleidung (8,17) aus Kunststoff bestehen, wobei die von den Ständerrohrprofilen ausragenden Kupplungsteile (13) mit der Kunststoffbekleidung dieser Rohrprofile aus einem Stück geformt sind, während die Enden der Holme mit Kupplungsteilen (18) versehen sind, die entsprechen der seitlich ausragenden Kupplungsteilen der Ständerrohrprofile geformt sind und formschlüssig mit der Bekleidung an den Stirnenden der Holme verbunden sind.

2. Regal nach Anspruch 1, dadurch gekennzeichnet, dass die zusammenarbeitenden Kupplungsteile von Ständer und Holm gegenseitig komplementär keilförmig profiliert sind.

3. Regal nach Anspruch 1 oder 2, dadurch gekennzeichnet, dass die ausragenden Kupplungsteile an den Ständerrohren durch vertikal gerichtete längliche Nocken gebildet werden, deren von der betreffenden Wandung des Ständerrohres abstehende Seiten nach unten divergieren und, im Querschnitt gesehen, zum Ständerrohr hin konvergieren, während die an den Holmen angeformten Kupplungsteile eine den betreffenden Kupplungsnocken ganz umschliessende Aufnahme aufweisen.

4. Regal nach Anspruch 3, dadurch gekennzeichnet, dass die Nocken an den einander zugekehrten Seiten der zum gleichen Ständer gehörenden Ständerrohre vorgesehen sind und zwar in Paaren von nebeneinanderliegenden Nocken, wobei die Nocken jedes Paares mit ihren voneinander abgekehrten Seiten in einer Ebene mit den betreffenden einander gegenüberliegegen Seitenwänden des betreffenden Ständerrohres liegen.

5. Regal nach Ansprüchen 1-4, dadurch gekennzeichnet, dass die Rohre jedes Ständers an den oberen und unteren Enden miteinander verbunden sind durch aus Kunststoff geformte Querelemente (9) mit an deren Enden angeformten, die Rohrenden umschliessenden buchsenartigen Teilen, wobei die Wandstärke der Rohrbekleidung im umschlossenen Gebiet allmählich zum betreffenden Rohrende hin abnimmt und die Innenumfangswandung der buchsenartigen Teile einen entsprechenden konischen Verlauf haben.

## Claims

1. Rack for use in freezers and storerooms, composed of at least two uprights and supports provided between the latter and supported on the uprights, the uprights consisting of two tube sections connected in the vicinity of the upper and lower ends and the supports each comprising two spars likewise formed by tube sections, whereof the ends are set up for engagement with coupling parts projecting laterally from the respective upright tube sections, characterized in that both the upright tube sections (1) as well as the spars (2) of these supports consist of a metal tube core (3, 15) and a covering (8, 17) of synthetic material enclosing the latter over the entire length all around, as well as at the ends, the coupling parts (13) projecting from the upright tube sections being formed in one piece with the synthetic covering of these tube sections, whereas the ends of the spars are provided with coupling parts (18), which are shaped to correspond to the laterally projecting coupling parts of the upright tube sections and are connected in a form-locking manner to the covering on the front ends of the spars.

2. Rack according to Claim 1, characterized in that the cooperating coupling parts of the upright and spar have a mutually complementary wedge-shaped profile.

3. Rack according to Claim 1 or 2, characterized in that the projecting coupling parts on the upright tubes are formed by vertically directed elongated lugs, whereof the sides projecting from the respective wall of the upright tube diverge downwards and, seen in cross section, converge towards the upright tube, whereas the coupling parts integrally formed on the spars comprise a housing completely surrounding the respective coupling lugs.

4. Rack according to Claim 3, characterized in that the lugs are provided on the facing sides of the upright tubes belonging to the same upright and indeed in pairs of lugs lying one beside the other, the lugs of each pair lying with their sides remote from each other in one plane with the respective opposing side walls of the respective upright tube.

5. Rack according to Claims 1 to 4, characterized in that the tubes of each upright are connected to each other at the upper and lower ends by transverse members (9) formed from synthetic material with bush-like parts formed at their ends and surrounding the tube ends, the wall thickness of the tube covering in the enclosed area decreasing gradually towards the respective end of the tube and the inner peripheral wall of the bush-like parts having a corresponding conical shape.

## Revendications

1. Étagère destinée à être utilisée dans les chambres froides et les magasins de stockage, constituée de deux montants au moins et de plaques d'appui reposant sur les montants et prévues pour être placées entre ceux-ci, les montants étant constitués de deux profilés tubulaires reliés entre eux à proximité des extrémités supérieure et inférieure, et chacune des plaques d'appui présentant deux longerons formés également de profilés tubulaires, dont les extrémités sont aménagées pour pouvoir s'emboîter dans les demi-accouplements qui font saillie latéralement par rapport aux profilés tubulaires respectifs des montants, caractérisée en ce que, aussi bien les profilés tubulaires des montants (1) que les longerons (2) des plaques d'appui sont constitués d'un noyau tubulaire métallique (3, 15) et d'un habillage (8, 17) en matière plastique enrobant ledit noyau tout autour, sur toute sa longueur ainsi qu'aux extrémités, les demi-accouplements (13), en saillie par rapport aux profilés tubulaires des montants, étant formés d'une seule pièce avec l'habillage plastique de ces profilés tubulaires, cependant que les extrémités des longerons sont pourvues de demi-accouplements (18), dont la forme correspond aux demi-accouplements en saillie latérale des profilés tubulaires des montants, et qui sont fixés à l'habillage sur les extrémités frontales des longerons dans lesquelles ils s'emboîtent.

2. Étagère selon la revendication 1, caractérisée en ce que les demi-accouplements coopérants du montant et du longeron sont profilés en forme de coins complémentaires l'un de l'autre.

3. Étagère selon la revendication 1 ou 2, caractérisée en ce que les demi-accouplements en saillie par rapport aux tubes de montants sont formés par des ergots oblongs disposés verticalement, dont les côtés les plus éloignés de la paroi concernée du tube de montant, divergent vers le bas et, dans une vue en plan, convergent vers le tube de montant, cependant que les demi-accouplements formés sur les longerons présentent un logement enserrant entièrement l'ergot d'accouplement concerné.

4. Étagère selon la revendication 3, caractérisée en ce que les ergots sont aménagés sur les côtés se faisant face des tubes de montants appartenant au même montant, et cela en paires d'ergots disposés côté à côte, les ergots de chaque paire avec leurs côtés se tournant le dos étant disposés dans le même plan que les parois latérales concernées du tube de montant concerné qui sont disposées face à face.

5. Étagère selon les revendications 1 à 4, caractérisée en ce que les tubes de chaque montant sont reliés entre eux aux extrémités inférieure et supérieure au moyen d'éléments transversaux (9) en matière plastique avec des parties en forme de douille, formées à leurs extrémités, enserrant les tubes, l'épaisseur de la paroi de l'habillage des tubes, dans une région enserrée, diminuant progressivement vers l'extrémité de tube concernée, et la paroi intérieure sur le pourtour des parties en forme de douille présentant une courbure conique correspondante.
